# EUROPEAN PATENT APPLICATION

(11) **EP 4 024 515 A1**
(43) Date of publication of application: **06.07.2022**
(21) Application number: 20929275.4
(22) Date of filing: 14.12.2020
(51) Int. Cl.: H01M 4/36, H01M 4/525

(54) **POSITIVE ELECTRODE MATERIAL AND PREPARATION METHOD THEREFOR, LITHIUM-ION BATTERY, AND ELECTRIC VEHICLE**

(30) Priority: 31.03.2020 CN 202010244482
(71) Applicant: SVOLT ENERGY TECHNOLOGY CO., LTD, Changzhou, Jiangsu 213200 (CN)
(72) Inventor: ZHU, Jinxin, hangzhou, Jiangsu 213200 (CN); WANG, Pengfei, hangzhou, Jiangsu 213200 (CN); ZHAO, Shuo, hangzhou, Jiangsu 213200 (CN)
(74) Representative: Cabinet Beaumont
(86) International application number: PCT/CN2020/136071
(87) International publication number: WO 2021/196732

(57) **Abstract**

A positive electrode material and a preparation method therefor, a lithium-ion battery, and an electric vehicle. The positive electrode material comprises: matrix particles, materials forming the matrix particles comprising at least one of a lithium-rich manganese-based material, lithium nickel cobalt manganese oxide, lithium nickel cobalt aluminum oxide, lithium iron phosphate, lithium manganate, lithium nickel cobalt manganese aluminate, and lithium nickel manganate; and a housing, the housing covering at least a portion of the outer surfaces of the matrix particles.

## Description

### TECHNICAL FIELD

The present disclosure relates to the technical field of lithium-ion batteries, such as positive electrode materials and preparation methods thereof, lithium-ion batteries and electric vehicles

### BACKGROUND

Under the policy guidance of various governments, a wave of electrification and cleanliness is now being set off in the entire automobile industry. As compared with fuel vehicles, electric vehicles, however, still have many problems, such as battery safety, cruising range, and long charging time. Therefore, the current battery technology still cannot fully meet the needs of consumers, and obtaining a lithium-ion battery with higher energy density is an urgent problem to be solved.

The lithium-rich manganese-based positive electrode material xLi₂MnO₃·(1-x)LiMO₂ (M=Ni, Co, Mn) has a specific capacity of ≥250mAh/g, a DSC decomposition temperature of up to 240°C and a relatively low cost, which is one of the important development directions of high energy density positive electrode materials. However, the lithium-rich manganese-based materials also have many problems, such as poor rate performance, low cycle capacity retention rate, and the manganese element content in the material being more than 50%. Manganese metal element has very poor metal conductivity, which reduces the intrinsic ionic conductivity of the material, so that lithium ions cannot be inserted in and out quickly from the material during high-current charging and discharging. In order to solve these problems, researchers have done a lot of work, but the current improvement measures can achieve limited improvement effects, and can only unilaterally increase the rate or cycle performance.

Therefore, the current technology related to positive electrode materials still needs to be improved.

### SUMMARY

The following is an overview of the topics detailed in this disclosure. This summary is not intended to limit the scope of protection of the claims.

The present disclosure provides a positive electrode material and a preparation method thereof, a lithium ion battery and an electric vehicle.

The present disclosure provides in an embodiment a positive electrode material comprising matrix particles, wherein the material forming the matrix particles comprises at least one selected from the group consisting of lithium-rich manganese-based materials, lithium nickel cobalt manganate, lithium nickel cobalt aluminate, lithium iron phosphate, lithium manganate, lithium nickel cobalt manganese aluminate, and lithium nickel manganate, and a shell covering at least a part of the outer surface of the matrix particles, wherein the material forming the shell comprises at least one selected from the group consisting of lithium titanium phosphate, lithium aluminum germanium phosphate and lithium aluminum titanium phosphate.

In the positive electrode material of the present disclosure, lithium titanium phosphate, lithium aluminum germanium phosphate or lithium aluminum titanium phosphate coats the matrix particles. That is to say, the surface of the matrix particles is modified, and the resulting positive electrode material has high ionic conductivity and low electrolyte reactivity. It can effectively improve the stability of the surface structure of the matrix particles, and significantly improve the and cycle performance.

In an embodiment, the shell has a thickness of 0-500 nm, and is not 0.

In an embodiment, the shell has a thickness of 0-200 nm, and is not 0.

In an embodiment, the shell has a thickness of 0-100 nm, and is not 0.

In an embodiment, the positive electrode material has a particle size distribution of 1-17µm. In an embodiment, the positive electrode material has a particle size distribution of 4-15µm. The particle size distribution is the particle size distribution range of the positive electrode material.

In an embodiment, the material forming the matrix particles is the lithium-rich manganese-based material; and the positive electrode material has a chemical composition of aLi_{2+α}Mn_{1-µ}Ti_{µ}O_{3-ν}F_{ν}·bLi_{1+α'}MO_{2-ν'}F_{ν'}·cLi_{1+α"}Al_{β}M'_{2-β}(PO₄)₃,
wherein a+b+c=1, 0<a<0.6, 0<b<0.5, 0<c≤0.05, 0≤α≤0.04, 0<µ≤0.5, 0.005≤ν≤0.02, 0≤α'≤0.04, -0.02≤α"≤1, 0.005≤ν'≤0.02, 0≤β<0.5;
M is at least one element selected from the group consisting of Ni, Co, Mn, Al, Mg, Ti, Zr, Zn, Ca, B, Ce and Cr;
M' is at least one element selected from the group consisting of Ti and Ge.

In an embodiment, the positive electrode material comprises at least one selected from the group consisting of
0.545Li₂MnO_{2.995}F_{0.005}·0.45Li_{0.99}Ni_{0.444}Co_{0.444}Mn_{0.122}O_{1.995}F_{0.005}·0.005Li_{1.3}Al_{0.3}Ti_{1.7}(PO₄)₃,
0.545Li₂Mn_{0.989}Ti_{0.011}O_{2.995}F_{0.005}·0.45Li_{0.976}Ni_{0.444}Co_{0.444}Mn_{0.136}O_{1.995}F_{0.005}·0.005Li_{1.3}Al_{0.3}Ti_{1 .7}(PO₄)₃, and
0.545Li₂Mn_{0.989}Ti_{0.011}O_{2.995}F_{0.005}·0.45Li_{0.976}Ni_{0.444}Co_{0.444}Mn_{0.136}O_{1.995}F_{0.005}·0.005Li_{1.3}Al_{0.3}Ti_{1 .7}(PO₄)₃.

In an embodiment, the positive electrode material satisfies at least one of the following conditions that
the discharge specific capacity at a rate of 0.1C is greater than or equal to 280mAh/g; and it is greater than or equal to 300mAh/g in an embodiment;
the discharge specific capacity at a rate of 1C is greater than or equal to 220mAh/g, and it is greater than or equal to 240mAh/g in an embodiment;
the capacity retention rate after 50 cycles of charge and discharge is greater than or equal to 85%; and it is greater than or equal to 86% in an embodiment.

The present disclosure provides in an embodiment a method for preparing the aforementioned positive electrode material, comprising: ball-milling a mixture of matrix particles and a shell raw material for 1-10 hours to obtain a mixed material; and calcining the mixed material at 300-900 °C under O₂/N₂ atmosphere for 1-12h to obtain the positive electrode material, wherein, the shell raw material is nano lithium titanium phosphate, nano lithium aluminum germanium phosphate or nano lithium aluminum titanium phosphate. This method can quickly and effectively obtain the aforementioned positive electrode material with simple steps and easy operation. The obtained positive electrode material has high ionic conductivity, low electrolyte reactivity, and can effectively improve the stability of the surface structure of the matrix particles. Surface-modified matrix particles can significantly improve the rate and cycle performance.

In an embodiment, the matrix particles are prepared by the following steps of calcining a precursor material at 300-800°C under O₂/N₂ atmosphere for 4-12h to obtain a first calcined product, mixing the first calcined product with a lithium source, and calcining the obtained mixture at 600-950°C under O₂/N₂ atmosphere for 10-24 hours to obtain the matrix particles.

In an embodiment, the matrix particles are prepared by the following steps of calcining a precursor material at 300-800°C under O₂/N₂ atmosphere for 4-12h to obtain a first calcined product, mixing the first calcined product with a lithium source, and calcining the obtained mixture at 600-950°C under O₂/N₂ atmosphere for 10-24 hours to obtain a second calcined product; and ball-milling a mixture of the second calcined product and nano-TiO₂ for 2-8 hours, then calcining at 750-850°C under O₂/N₂ atmosphere for 4-16 hours to obtain the matrix particles.

The present disclosure provides in an embodiment a lithium ion battery comprising the aforementioned positive electrode material. The lithium ion battery has better rate performance and cycle performance and higher energy density.

The present disclosure provides in an embodiment an electric vehicle comprising the lithium ion battery above. The electric vehicle using the above-mentioned lithium-ion battery has better endurance.

### DETAILED DESCRIPTION OF DRAWINGS

The drawings are used to provide a further understanding of the technical solution of the present disclosure, and constitute a part of the specification. The drawings, together with the embodiments of the present application, are used to explain the technical solution of the present disclosure, and do not constitute a limitation to the technical solution of the present disclosure.
Fig. 1 is a first charging and discharging curve of the positive electrode material in the comparative example and Example 1 of the present disclosure.
Fig. 2 is a first charge and discharge curve of the positive electrode material in the comparative example and Example 2 of the present disclosure.
Fig. 3 is a first charge and discharge curve of the positive electrode material in the comparative example and Example 3 of the present disclosure.
Fig. 4 is a test result of rate performance of the positive electrode material in the comparative example and Example 1 of the present disclosure.
Fig. 5 is a test result of rate performance of the positive electrode material in the comparative example and Example 2 of the present disclosure.
Fig. 6 is a test result of rate performance of the positive electrode material in the comparative example and Example 3 of the present disclosure.
Fig. 7 is a test result of the cycle performance of the positive electrode material in the comparative example and Example 1 of the present disclosure.
Fig. 8 is a test result of the cycle performance of the positive electrode material in the comparative example and Example 2 of the present disclosure.
Fig. 9 is a test result of the cycle performance of the positive electrode material in the comparative example and Example 3 of the present disclosure.

### DETAILED DESCRIPTION

The technical solutions of the present disclosure will be further described below with reference to the drawings and specific implementations.

The present disclosure provides in an embodiment a positive electrode material comprising matrix particles, wherein the material forming the matrix particles comprises at least one selected from the group consisting of lithium-rich manganese-based materials, lithium nickel cobalt manganate, lithium nickel cobalt aluminate, lithium iron phosphate, lithium manganate, lithium nickel cobalt manganese aluminate, and lithium nickel manganate, and a shell covering at least a part of the outer surface of the matrix particles, wherein the material forming the shell comprises at least one selected from the group consisting of lithium titanium phosphate, lithium aluminum germanium phosphate and lithium aluminum titanium phosphate. The positive electrode material obtained by surface-modifying or coating the active material with lithium titanium phosphate (LiTi₂(PO₄)₃, LTP), lithium aluminum germanium phosphate (Li_{1+α"}Al_{β}Ge_{2-β}(PO₄)₃) or lithium aluminum titanium phosphate (Li_{1+α"}Al_{β}Ti_{2-β}(PO₄)₃) has high ion conductivity and low electrolyte reactivity, and can effectively improve the stability of the surface structure of the matrix particles. At the same time, the surface modified matrix particles can significantly improve the rate and cycle performance.

In an embodiment, the material forming the matrix particles is a lithium-rich manganese-based material (or referred to as a lithium-rich manganese-based positive electrode material). The lithium-rich manganese-based positive electrode material xLi₂MnO₃·(1-x)LiMO₂ (M=Ni, Co, Mn, *etc.)* is considered to be composed of Li₂MnO₃ (C2/m space group) and LiMO₂ (R-3m space group). Thus the lithium manganese-based positive electrode materials have a complex two-phase crystal structure. In the process of material synthesis, controlling the relative content of the two crystal phases largely determines the specific capacity of the positive electrode material. In addition, even if a lithium-rich manganese-based positive electrode material with a high specific capacity is obtained, the capacity retention rate will rapidly decay after a long period of charge and discharge cycles. A possible mechanism for the decrease in capacity retention is that the transition metal ions at the octahedral site of the transition metal layer in the crystal structure of the lithium-rich manganese-based positive electrode material migrate to the octahedral site of the lithium layer through the tetrahedral site at the intermediate position; transition metal ions can almost reversibly shuttle between the octahedral site of the transition metal layer and the tetrahedral site in the middle position (under 100% SOC conditions, its content reaches about 4%); after reaching the tetrahedral site of the lithium layer, the transition metal ions can basically only migrate to the octahedral sites of the lithium layer in one direction. This lithium/transition metal ion mixing may be an important reason for the poor cycle stability of the material. There is also a view that the formation of LiMn₂O₄ crystal phase is an important factor leading to capacity degradation during the charge-discharge cycle. Therefore, the lithium-rich manganese-based positive electrode material has inherent defects, which causes it to exhibit a serious cycle capacity retention problem. However, the coated shell of the coated lithium-rich manganese-based positive electrode material provided in the present disclosure can fit well with the structure of the matrix particles, can provide a good lithium ion migration channel, and can improve the stability of the electrochemical structure of the matrix particles. It can improve the ionic conductivity of the material while improving the cycle stability, and overcome the problem that the existing modified lithium-rich manganese-based positive electrode materials can only unilaterally improve the rate performance or cycle performance.

In an embodiment, the lithium-rich manganese-based positive electrode material used may include nickel cobalt manganese carbonate or nickel cobalt manganese hydroxide. It may be Ni_{0.2}Co_{0.2}Mn_{0.6}CO₃, Ni_{0.3}Co_{0.2}Mn_{0.5}CO₃, Ni_{0.3}Co_{0.2}Mn_{0.5}(OH)₂, Ni_{0.2}Co_{0.1}Mn_{0.7}CO₃, Ni_{0.2}Co_{0.1}Mn_{0.7}(OH)₂ in one embodiment.

In an embodiment, the material forming the shell comprises at least one selected from the group consisting of lithium titanium phosphate, lithium aluminum germanium phosphate and lithium aluminum titanium phosphate. In the present disclosure, the shell material has high ionic conductivity, which can effectively improve the migration rate of lithium ions at the interface. In addition, the reaction activity between the shell material and the electrolyte is low, which can significantly reduce the corrosion of the electrolyte to the cathode material and enhance the structural stability of the cathode material particles during cycling. In addition, the above-mentioned shell material can also function as a buffer layer, has a dual function, and can better improve the electrochemical performance of the positive electrode material.

In an embodiment, the shell has a thickness of 0-500 nm, and is not 0; in an embodiment, the shell has a thickness of 0-200 nm, and is not 0; in an embodiment, the shell has a thickness of 0-100 nm, and is not 0, e.g. 5nm, 10nm, 15nm, 20nm, 25nm, 30nm, 35nm, 40nm, 45nm, 50nm, 55nm, 60nm, 65nm, 70nm, 5nm, 80nm, 85nm, 90nm, 95nm, 100nm and *etc.* Within this thickness range, the shell can simultaneously enhance the conductivity and stabilize the cathode material/ electrolyte interface. If the thickness is too high, the thickness will cause additional unnecessary lithium ion migration paths, which will have a certain inhibitory effect on the electrical performance.

In an embodiment, the outer shell is composed of a layer of dense and uniform nano-microspheres with smooth lithium ion diffusion and migration channels inside to improve ion conductivity and stabilize the structure of the surface of the positive electrode material particles.

In an embodiment, the shell may only cover part of the outer surface of the matrix particles, or may be covered on the entire outer surface of the matrix particles, that is, the shell wraps the matrix particles inside. In some embodiments, the shell covers the entire outer surface of the matrix particles. As a result, the obtained positive electrode material has higher ionic conductivity, and at the same time better cycle performance and rate performance.

In an embodiment, the material forming the matrix particles is a lithium-rich manganese-based positive electrode material having the chemical composition of aLi_{2+α}Mn_{1-µ}Ti_{µ}O_{3-ν}F_{ν}·bLi_{1+α'}MO_{2-ν'}F_{ν'}·cLi_{1+α"}Al_{β}M'_{2-β}(PO₄)₃, wherein a+b+c=1, 0<a<0.6, 0<b<0.5, 0<c≤0.05, 0≤α≤0.04, 0<µ≤0.5, 0.005≤ν≤0.02, 0≤α'≤0.04, -0.02≤α"≤1, 0.005≤ν'≤0.02, 0≤β<0.5; M is at least one element selected from the group consisting of Ni, Co, Mn, Al, Mg, Ti, Zr, Zn, Ca, B, Ce and Cr; M' is at least one element selected from the group consisting of Ti and Ge. The positive electrode material with this chemical composition has high ion conductivity and low electrolyte reactivity, can effectively improve the stability of the surface structure of lithium-rich manganese-based matrix particles, and can significantly improve the rate performance and cycle performance at the same time.

In an embodiment, the positive electrode material comprises at least one selected from the group consisting of
0.545Li₂MnO_{2.995}F_{0.005}·0.45Li_{0.99}Ni_{0.444}Co_{0.444}Mn_{0.122}O_{1.995}F_{0.005}·0.005Li_{1.3}Al_{0.3}Ti_{1.7}(PO₄)₃,
0.545Li₂Mn_{0.989}Ti_{0.011}O_{2.995}F_{0.005}·0.45Li_{0.976}Ni_{0.444}Co_{0.444}Mn_{0.136}O_{1.995}F_{0.005}·0.005Li_{1.3}Al_{0.3}Ti₁ .₇(PO₄)₃, and
0.545Li₂Mn_{0.989}Ti_{0.011}O_{2.995}F_{0.005}·0.45Li_{0.976}Ni_{0.444}Co_{0.444}Mn_{0.136}O_{1.995}F_{0.005}·0.005Li_{1.3}Al_{0.3}Ti_{1 .7}(PO₄)₃.

In an embodiment, the positive electrode material has a particle size distribution of 1-17µm. In an embodiment, the positive electrode material has a particle size distribution of 4-15µm, *e.g.* 4, 5, 6, 7, 8, 9, 10, 11, 12, 13, 14, 15 and *etc.* Within this particle size distribution range, the positive electrode material has better performance. If it is not within this particle size distribution range, it will affect the processing performance of subsequent positive electrode pieces, increase the diffusion distance of lithium ions inside the particles and reduce the rate performance. The particle size distribution is the particle size distribution range of the positive electrode material.

In an embodiment, the positive electrode material in the present disclosure can simultaneously improve rate performance and cycle performance, and the above-mentioned positive electrode material satisfies at least one of the following conditions that the discharge specific capacity at a rate of 0.1C is greater than or equal to 280mAh/g, and is greater than or equal to 300mAh/g in one embodiment, *e.g*. 280 mAh/g, 290 mAh/g, 300 mAh/g, 310 mAh/g, 320 mAh/g, 330 mAh/g, 340 mAh/g, 350 mAh/g, 360 mAh/g, 370 mAh/g, 380 mAh/g, 390 mAh/g, 400 mAh/g and *etc.;* the discharge specific capacity at a rate of 1C is greater than or equal to 220mAh/g, and is greater than or equal to 240mAh/g in one embodiment, *e.g*. 220 mAh/g, 230 mAh/g, 240 mAh/g, 250 mAh/g, 260 mAh/g, 270 mAh/g, 280 mAh/g, 290 mAh/g, 300 mAh/g, 310 mAh/g, 320 mAh/g, 330 mAh/g, 340 mAh/g, 350 mAh/g and *etc.;* the capacity retention rate after 50 cycles of charge and discharge is greater than or equal to 85%, and is greater than or equal to 85% in one embodiment, *e.g*. 85%, 85.5%, 86%, 86.5%, 87%, 87.5%, 88%, 88.5%, 89%, 89.5%, 90% and *etc.*

The present disclosure discloses in one embodiment a method for preparing the positive electrode material above comprising: ball-milling a mixture of matrix particles and a shell raw material for 1-10 hours to obtain a mixed material; calcining the mixed material at 300-900 °C under O₂/N₂ atmosphere for 1-12h to obtain the positive electrode material, wherein, the shell material is nano lithium titanium phosphate, nano lithium aluminum germanium phosphate or nano lithium aluminum titanium phosphate. This method can be used to quickly and effectively obtain the above-mentioned positive electrode material with simple steps and easy operation. The obtained positive electrode material has high ionic conductivity, low electrolyte reaction activity, and can effectively improve the stability of the surface structure of the matrix particles. At the same time, the surface modified matrix particles can significantly improve the rate and cycle performance.

In one embodiment, the mixture of matrix particles and shell raw materials can be placed in a planetary ball mill for grinding and mixing. The grinding can be carried out for 1, 2, 3, 4, 5, 6, 7, 8, 9, 10 hours, etc. Then, the mixed material obtained after ball milling can be placed in a calcining furnace at 300-900°C *(e.g.* 300°C, 350°C, 400°C, 450°C, 500°C, 550°C, 600°C, 650°C, 700°C, 750°C, 800°C, 850°C, 900°C, *etc.)* with O₂/N₂ atmosphere (where O₂ content is 0-100%, such as 0%, 10%, 20%, 30%, 40%, 50%, 60%, 70%, 80%, 90%, 100%, *etc.),* and calcined for 1 h, 2 h, 3 h, 4 h, 5 h, 6 h, 7 h, h, 9 h, 10 h, 11 h, 12 h, *etc.* Thus, the ball milling can mix the matrix particles and the shell raw materials uniformly, so that the shell raw materials are evenly wrapped on the outer surface of the matrix particles. Calcination can make the matrix particles and the shell raw materials react with each other, so that the shell materials are tightly attached to the surface of the particles. Furthermore, the above steps can coat the surface of the matrix particles with a nano-thickness shell with simple operation and mild conditions, and the obtained positive electrode material has better performance.

In an embodiment, the matrix particles and shell raw materials can be mixed in a ratio where the shell raw materials account for 0.5%-5% (mass ratio) *(e.g.* 0.5%, 1%, 1.5%, 2%, 2.5%, 3%, 3.5 %, 4%, 4.5%, 5%, *etc.)* of the matrix particles, thus having a better coating effect. If the shell material is too less, it will cause non-ideal coating effect or poor effect of improving the electrochemical performance. If it is too much, the coating layer will be too thick to affect lithium ion conduction and cause waste of materials.

In one embodiment, the positive electrode material obtained after calcination can be taken out and placed in a mortar/pestle for grinding according to actual needs. As a result, the positive electrode material with a suitable particle size can be obtained, so as to further improve the use performance of the positive electrode material.

In one embodiment, the matrix particles are prepared by the following steps of calcining the precursor material at 300-800°C *(e.g.* 300°C, 350°C, 400°C, 450°C, 500°C, 550°C, 600°C, 650°C, 700°C, 750°C, 800°C *etc.)* under O₂/N₂ atmosphere (where, the O₂ content is 0-100%, *e.g.* 0%, 10%, 20%, 30%, 40%, 50%, 60%, 70%, 80%, 90%, 100%, *etc.)* for 4-12h *(e.g.* 4h, 5h, 6h, 7h, 8h, 9h, 10h, 11h, 12h and *etc.)* to obtain the first calcined product; mixing the first calcined product with a lithium source, and calcining the obtained mixture at 600-950°C *(e.g.* 600°C, 650°C, 700°C, 750°C, 800°C, 850°C, 900°C, 950°C and *etc.)* under O₂/N₂ atmosphere (where, the O₂ content is 0-100%, *e.g.* 0%, 10%, 20%, 30%, 40%, 50%, 60%, 70%, 80%, 90%, 100%, *etc.)* for 10-24 hours *(e.g.* 10h, 11h, 12h, 13h, 14h, 15h, 16h, 17h, 18h, 19h, 20h, 21h, 22h, 23h, 24h and *etc.)* to obtain the matrix particles. The precursor material that can be used can include nickel cobalt manganese carbonate or nickel cobalt manganese hydroxide (*e.g*. Ni_{0.2}Co_{0.2}Mn_{0.6}CO₃, Ni_{0.3}Co_{0.2}Mn_{0.5}CO₃, Ni_{0.3}Co_{0.2}Mn_{0.5}(OH)₂, Ni_{0.2}CO_{0.1}Mn_{0.7}CO₃, Ni_{0.2}Co_{0.1}Mn_{0.7}(OH)₂). The precursor material can change the carbonate or hydroxide form to the oxide form through the calcination temperature, and the latter has relative well-developed pores, which is conducive to the entry of lithium metal into the precursor in the subsequent calcination process, so as to make the lithium metal uniformly be distributed in the particle phase and to form a uniform positive electrode material. The lithium source may include at least one of LiOH·H₂O, Li₂CO₃ and LiF. Optionally, the above-mentioned lithium source may be used in conjunction with NH₄F. For example, NH₄F may be used in conjunction with LiOH•H₂O or Li₂CO₃. After calcination, lithium can be introduced into the precursor material to effectively obtain matrix particles.

In an embodiment, the mass ratio of the first calcined product to the lithium source may be 1.2 to 1.6:1, *e.g.* 1.2:1, 1.3:1, 1.4:1, 1.5:1, 1.6:1 and *etc.* As a result, lithium can better enter the first calcined product, and be evenly distributed in the particle phase to obtain a uniform positive electrode material.

In the present disclosure, the product after each calcination can be subjected to grinding treatment as required in the process of preparing the matrix particles.

In one embodiment, the mixture of the first calcined product and the lithium source can be fully ground with a mortar/pestle, and the mixture of the calcined first calcined product and the lithium source can be fully ground in a mortar.

In an embodiment, the matrix particles could be prepared by the following steps of weighing a certain mass of a precursor material, such as Ni_{0.2}Co_{0.2}Mn_{0.6}CO₃; calcining the precursor material in a calciner at 300-800°C under O₂/N₂ atmosphere (oxygen content 0-100%) for 4-12h; weighing a certain mass of lithium source, such as LiOH·H₂O or Li₂CO₃, and LiF or NH₄F; mixing the calcined precursor with two lithium salts and grinding the powder mixture thoroughly with a mortar/pestle; calcining the obtained powder mixture in a calciner at 600-950°C under O₂/N₂ atmosphere (containing 0-100% O₂) for 10-24 hours; placing the calcined powder material in a mortar and grinding thoroughly to obtain matrix particles.

In an embodiment, the matrix particles could be prepared by the following steps of calcining the precursor material at 300-800°C *(e.g.* 300°C, 350°C, 400°C, 450°C, 500°C, 550°C, 600°C, 650°C, 700°C, 750°C, 800°C and *etc.)* under O₂/N₂ atmosphere (where, the O₂ content is 0-100%, *e.g.* 0%, 10%, 20%, 30%, 40%, 50%, 60%, 70%, 80%, 90%, 100%) for 4-12h *(e.g.* 4h, 5h, 6h, 7h, 8h, 9h, 10h, 11h, 12h) to obtain the first calcined product; mixing the first calcined product with a lithium source, and calcining the obtained mixture at 600-950°C *(e.g.* 600°C, 650°C, 700°C, 750°C, 800°C, 850°C, 900°C, 950°C) under O₂/N₂ atmosphere for 10-24 hours *(e.g.* 10h, 11h, 12h, 13h, 14h, 15h, 16h, 17h, 18h, 19 h, 20 h, 1 h, 22 h, 23 h, 24 h) to obtain the second calcined product; ball-milling the mixture of the second calcined product and nano-TiO₂ for 2-8 hours *(e.g.* 2h, 3h, 4h, 5h, 6h, 7h, 8h), then calcining at 750-850°C *(e.g.* 750°C, 760°C, 770°C, 780°C, 790°C, 800°C, 810°C, 820°C, 830 °C, 840 °C, 850 °C) under O₂/N₂ atmosphere (where, the O₂ content is 0-100%, *e.g.* 0%, 10%, 20%, 30%, 40%, 50%, 60%, 70%, 80%, 90%, 100%) for 4-16 hours *(e.g.* 4h, 5h, 6h, 7h, 8h, 9h, 10h, 11h, 12h, 13 h, 14 h, 15 h, 16 h) to obtain the matrix particles. Wherein, the precursor, the lithium source and so on can be consistent with the previous description, and will not be repeated here.

In an embodiment, the nano-titanium oxide accounts for 0.1% to 1% (mass ratio) of the second calcined product, *e.g.* 0.1%, 0.2%, .3%, 0.4%, 0.5%, 0.6%, 0.7%, 0.8%, 0.9%, 1% and *etc.;* the first additive accounts for 0.5% ~ 5% (mass ratio) of the third calcined product, *e.g.* 0.05%, 1%, 1.5%, 2%, 2.5%, 3%, 3.5%, 4%, 4.5%, 5% and *etc.* As a result, the coating effect of the outer shell is better, and the electrochemical performance of the obtained cathode material is better.

In one embodiment, the surface of the matrix particles can be coated to form a shell in different ways. In one embodiment, the matrix particles may be coated with the prepared shell material, so that the shell in the obtained positive electrode material is the same substance with a single crystal phase and no impurities.

In one embodiment, the shell can be formed by the following steps of mixing the matrix particles with the shell material, and ball-milling the resulting mixture for 1-10h *(e.g.* 1h, 2h, 3h, 4h, 5h, 6h, 7h, 8h, 9h, 10h and *etc.),* calcining at 300-900°C *(e.g.* 300°C, 400°C, 500°C, 600°C, 700°C, 800°C, 900°C and *etc.)* under O₂/N₂ atmosphere for 1-12h *(e.g.* 1h, 2h, 3h, 4h, 5h, 6h, 7h, 8h, 9h, 10h, 11h, 12h and *etc.)* to obtain the above-mentioned positive electrode material, wherein the above-mentioned shell material is nano-lithium titanium phosphate (LiTi₂(PO₄)₃), lithium aluminum germanium phosphate (Li_{1+α"}Al_{β}Ge_{2-β}(PO₄)₃) or lithium aluminum titanium phosphate (Li_{1+α"}Al_{β}Ti_{2-β}(PO₄)₃).

In another embodiment, the raw material forming the shell can directly react with the matrix particles. During the reaction process, it reacts to form a shell with the target composition while the shell raw material covers the matrix particles. But it is easy to produce side reactions, and the shell contains the impurity phase so as to affect the electrochemical performance of the obtained positive electrode material.

In one embodiment, the shell can be formed by the following steps of mixing the matrix particles with an additive, and ball-milling the resulting mixture for 1-10h *(e.g.* 1h, 2h, 3h, 4h, 5h, 6h, 7h, 8h, 9h, 10h and *etc.),* calcining at 300-1000°C *(e.g.* 300°C, 400°C, 500°C, 600°C, 700°C, 800°C, 900°C, 1000°C and *etc.)* under O₂/N₂ atmosphere for 1-12h *(e.g.* 1h, 2h, 3h, 4h, 5h, 6h, 7h, 8h, 9h, 10h, 11h, 12h and *etc.)* to obtain the above-mentioned positive electrode material, wherein the additive comprise a titanium-containing compound and a phosphorus-containing compound. In one embodiment, the second additive comprises at least one of Li₂CO₃, TiO₂, (NH₄)H₂PO₄, Ti{OCH(CH₃)₂}₄, H₂TiO₃, (NH₄)₃PO₄ and Li₃PO₄. Optionally, the above-mentioned second additive can be used in conjunction with Al(OH)₃.

In an embodiment, the additive accounts for 0.5% to 5% (mass ratio) of the matrix particles, and in an embodiment may be 0.5%, 1%, 1.5%, 2%, 2.5%, 3%, 3.5%, 4 %, 4.5%, 5% and *etc.* As a result, the coating effect of the outer shell is better, and the electrochemical performance of the obtained cathode material is better.

In one embodiment, the ball milling can be performed by a planetary ball mill in the above step of forming the shell. The calcination can be performed in a calciner, and the product obtained by each calcination can be ground with a mortar/pestle as needed.

In one embodiment, the shell can be formed on the outer surface of the matrix particles by the following steps of weighing a certain mass of nano-TiO₂ and the above-mentioned calcined material, placing them in a planetary ball mill, grinding and mixing for 2-8 hours, and then calcining at about 750-850°C in a calcining furnace under O₂/N₂ atmosphere (oxygen content 0-100%) for 4-16h; weighing a certain mass of the first additive, nano-lithium titanium phosphate (LiTi₂(PO₄)₃), lithium aluminum germanium phosphate (Li_{1+α"}Al_{β}Ge_{2-β}(PO₄)₃) or lithium aluminum titanium phosphate (Li_{1+α"}Al_{β}Ti_{2-β}(PO₄)₃), placing and ball-milling with the above-mentioned calcined powder materials in a planetary ball mill for 1-10h until uniformly mixed; placing the ground powder material in a 300-900°C calcining furnace, calcining under O₂/N₂ atmosphere (containing 0-100% O₂) for 1-12h; after calcination, taking out and grinding in a mortar/pestle to obtain a positive electrode material.

In another embodiment, the shell can be formed on the outer surface of the matrix particles by the following steps of weighing a certain mass of second additives that are a titanium-containing compound and a phosphorus-containing compound, such as Li₂CO₃, Al(OH)₃, TiO₂, (NH₄)H₂PO₄; TiO₂, Ti{OCH(CH₃)₂}₄, or H₂TiO₃, and Li₃PO₄, (NH₄)₃PO₄, or Li₃PO₄; mixing the matrix particles with the second additives mentioned above, and ball milling in a planetary ball mill for 1-10h until uniformly mixed; calcining the mixed materials in a 300-1000°C calciner under O₂/N₂ atmosphere (containing 0-100% O₂) for 1-12h; after calcination, taking out the product and grinding in a mortar/pestle to obtain a positive electrode material.

In one embodiment of the present disclosure, a lithium ion battery is provided. The lithium ion battery includes the aforementioned positive electrode material. The rate performance and cycle performance of the lithium ion battery are better, and the energy density is higher.

It can be understood that, in addition to the positive electrode material described above, the lithium-ion battery may also include the necessary structures and components of a conventional lithium-ion battery. For example, it may include a positive electrode sheet, a negative electrode sheet, an electrolyte, a separator and a casing, *etc.,* and the above-mentioned components may be assembled together according to the structure of the conventional lithium-ion batteries, wherein the positive electrode material described above constitutes the positive electrode active material in the positive electrode sheet.

In an embodiment of the present disclosure, an electric vehicle is provided. The electric vehicle includes the above-mentioned lithium ion battery. The electric vehicle using the above-mentioned lithium-ion battery has better endurance.

It can be understood that, in addition to the lithium-ion battery described above, the electric vehicle may also include the necessary structures and components of a conventional electric vehicle, such as an engine, a body, tires, bearing, an interior trim, etc., which can be carried out with reference to related technologies and will not be respectively repeated here.

The embodiments of the present disclosure are described in detail below.

### Example 1

1 mol of Ni_{0.2}CO_{0.2}Mn_{0.6}CO₃ was placed in a calcining furnace at about 700°C, and calcined under an O₂/N₂ atmosphere with an oxygen content of 2% for about 8 hours, and then mixed and ground thoroughly together with 1.535mol of LiOH·H₂O and 0.00495mol of NH₄F; then calcined in a calciner at about 820 °C under an O₂/N₂ atmosphere with an oxygen content of 2% for about 12 hours. The calcined powder product and 0.005mol of nano-Li_{1.3}Al_{0.3}Ti_{1.7}(PO₃)₃ was fully grinded and mixed in a planetary ball mill for about 10 hours, and then calcined in a calciner at about 670 °C, under an O₂/N₂ atmosphere with an oxygen content of 1% for about 10 hours to obtain the positive electrode material. The chemical formula is shown in the following formula:

0.545Li₂MnO_{2.995}F_{0.005}·0.45Li_{0.99}Ni_{0.444}Co_{0.444}Mn_{0.122}O_{1.995}F_{0.005}·0.005Li_{1.3}Al_{0.3}Ti_{1.7}(PO₄)₃.

The particle size distribution of the positive electrode material particles was 4-15 µm; and the thickness of the shell layer was 100 nm.

### Example 2

1 mol of Ni_{0.2}Co_{0.2}Mn_{0.6}CO₃ was placed in a calcining furnace at about 700°C, and calcined under an O₂/N₂ atmosphere with an oxygen content of 2% for about 8 hours, and then mixed and ground thoroughly together with 1.529mol of LiOH·H₂O and 0.00497mol of NH₄F; then calcined in a calciner at about 820 °C under an O₂/N₂ atmosphere with an oxygen content of 2% for about 12 hours. The calcined powder sample and 0.006mol of nano-TiO₂ was fully grinded and mixed in a planetary ball mill for about 10 hours, and then calcined in a calciner at about 850 °C, under an O₂/N₂ atmosphere with an oxygen content of 2% for about 10 hours; placing together with 0.005mol nano-Li_{1.3}Al_{0.3}Ti_{1.7}(PO₃)₃ in a planetary ball mill to fully grind and mix for about 10 hours, and then calcined in a calciner at about 670°C under an O₂/N₂ atmosphere with an oxygen content of 1% for about 10 hour to obtain a positive electrode material. The chemical formula is shown in the following formula:

0.545Li₂Mn_{0.989}Ti_{0.011}O_{2.995}F_{0.005}·0.45Li_{0.976}Ni_{0.444}Co_{0.444}Mn_{0.136}O_{1.995}F_{0.005}·0.005Li_{1.3}Al_{0.3}Ti_{1 .7}(PO₄)₃.

The particle size distribution of the positive electrode material particles was 4-15 µm; and the thickness of the shell layer was 100 nm.

### Example 3

1 mol of Ni_{0.2}Co_{0.2}Mn_{0.6}CO₃ was placed in a calcining furnace at about 700°C, and calcined under an O₂/N₂ atmosphere with an oxygen content of 2% for about 8 hours, and then mixed and ground thoroughly together with 1.534mol of LiOH·H₂O and 0.00497mol of NH₄F; then calcined in a calciner at about 820 °C under an O₂/N₂ atmosphere with an oxygen content of 2% for about 12 hours. The calcined powder sample and 0.006mol of nano-TiO₂ was fully grinded and mixed in a planetary ball mill for about 10 hours, and then calcined in a calciner at about 850 °C, under an O₂/N₂ atmosphere with an oxygen content of 2% for about 10 hours; placing together with 0.0065mol Li₂CO₃, 0.0145mol Al(OH)₃, 0.008mol TiO₂ and 0.015mol (NH₄)H₂PO₄ in a planetary ball mill to fully grind and mix for about 10 hours, and then calcined in a calciner at about 1255°C under an O₂/N₂ atmosphere with an oxygen content of 1% for about 10 hours to obtain a positive electrode material. The chemical formula is shown in the following formula:

0.545Li₂Mn_{0.989}Ti_{0.011}O_{2.995}F_{0.005}·0.45Li_{0.976}Ni_{0.444}Co_{0.444}Mn_{0.136}O_{1.995}F_{0.005}·0.005Li_{1.3}Al_{0.3}Ti_{1 .7}(PO₄)₃

The particle size distribution of the positive electrode material particles was 4-15 µm; and the thickness of the shell layer was 450 nm.

### Example 4

1 mol of Ni_{0.2}Co_{0.2}Mn_{0.6}CO₃ was placed in a calcining furnace at about 300°C, and calcined under an O₂/N₂ atmosphere with an oxygen content of 2% for about 12 hours, and then mixed and ground thoroughly together with 1.535mol of LiOH·H₂O and 0.00495mol of NH₄F; then calcined in a calciner at about 820 °C under an O₂/N₂ atmosphere with an oxygen content of 2% for about 10 hours. The calcined powder product and 0.005mol of Li_{1.3}Al_{0.3}Ge_{1.7}(PO₃)₃ was fully grinded and mixed in a planetary ball mill for about 10 hours, and then calcined in a calciner at about 700 °C under an O₂/N₂ atmosphere with an oxygen content of 1% for about 12 hours to obtain a positive electrode material. The chemical formula is shown in the following formula:

0.545Li₂MnO_{2.995}F_{0.005}·0.45Li_{0.99}Ni_{0.444}Co_{0.444}Mn_{0.122}O_{1.995}F_{0.005}·0.005Li_{1.3}Al_{0.3}Ge_{1.7}(PO₄)₃.

The particle size distribution of the positive electrode material particles was 4-15 µm; and the thickness of the shell layer was 200 nm.

### Example 5

1 mol of Ni_{0.2}Co_{0.2}Mn_{0.6}CO₃ was placed in a calcining furnace at about 800°C, and calcined under an O₂/N₂ atmosphere with an oxygen content of 2% for about 4 hours, and then mixed and ground thoroughly together with 1.535mol of LiOH·H₂O and 0.00495mol of NH₄F; then calcined in a calciner at about 820 °C under an O₂/N₂ atmosphere with an oxygen content of 2% for about 24 hours. The calcined powder sample and 0.005mol of LiTi₂(PO₄)₃ was fully grinded and mixed in a planetary ball mill for about 10 hours, and then calcined in a calciner at about 900 °C under an O₂/N₂ atmosphere with an oxygen content of 1% for about 1 hours to obtain a positive electrode material. The chemical formula is shown in the following formula:

0.545Li₂MnO_{2.995}F_{0.005}·0.45Li_{0.99}Ni_{0.444}Co_{0.444}Mn_{0.122}O_{1.995}F₀.₀₀₅·0.005LiTi₂(PO₄)₃.

The particle size distribution of the positive electrode material particles was 4-15 µm; and the thickness of the shell layer was 550 nm.

### Example 6

1 mol of LiFePO₄ and 0.004 mol of nano-LiTi₂(PO₄)₃ were placed in a planetary ball mill to fully grind and mix for about 10 hours, and then calcined in a calciner at about 900°C under an O₂/N₂ atmosphere with an oxygen content of 1% for about 1 hour to obtain a positive electrode material. The chemical formula is as follows:

LiFePO₄·0.004LiTi₂(PO₄)₃.

The particle size distribution of the positive electrode material particles was 4-15 µm; and the thickness of the shell layer was 550 nm.

### Example 7

1 mol of LiNi_{0.8}Co_{0.1}Mn_{0.1}O₂ and 0.003 mol of nano-LiTi₂(PO₄)₃ were placed in a planetary ball mill to fully grind and mix for about 10 hours, and then calcined in a calciner at about 900°C under an O₂/N₂ atmosphere with an oxygen content of 1% for about 1 hour to obtain a positive electrode material. The chemical formula is as follows: LiNi_{0.8}Co_{0.1}Mn_{0.1}O₂·0.003LiTi₂(PO₄)₃.

The particle size distribution of the positive electrode material particles was 4-15 µm; and the thickness of the shell layer was 550 nm.

### Comparative Example

1 mol of Ni_{0.2}Co_{0.2}Mn_{0.6}CO₃ was placed in a calcining furnace at about 700°C, and calcined under an O₂/N₂ atmosphere with an oxygen content of 2% for about 8 hours, and then mixed and ground thoroughly together with 1.55mol of LiOH·H₂O and 0.005mol of NH₄F; then calcined in a calciner at about 820 °C under an O₂/N₂ atmosphere with an oxygen content of 2% for about 12 hours. The solid powder in a mortar to obtain a lithium-rich manganese-based positive electrode material. The chemical formula is shown in the following formula:

0.55Li₂MnO_{2.995}F_{0.005}·0.45Li_{1.001}Ni_{0.444}Co_{0.444}Mn_{0.111}O_{1.995}F_{0.005}

The particle size distribution of the positive electrode material particles was 1-17 µm.

Electrical performance test:
Button batteries were assembled with lithium metal sheets in a glove box filled with argon. The positive electrode sheet was composed of 92wt.% active material *(i.e.* the positive electrode material prepared above), 4wt.% Super-P conductive agent and 4wt.% PVDF binder. The electrolyte was made up of 1 M LiPF6, ethylene carbonate and dimethyl carbonate in the same volume, and corresponding additives.

The test system for the first charge and discharge was that the voltage window was 2-4.8V; the charge-discharge rate was 0.1C; the rate performance was tested at the discharge rates of 0.1C, 0.2C, 0.5C, 1C and 2C; and the voltage window was 2-4.6 V.

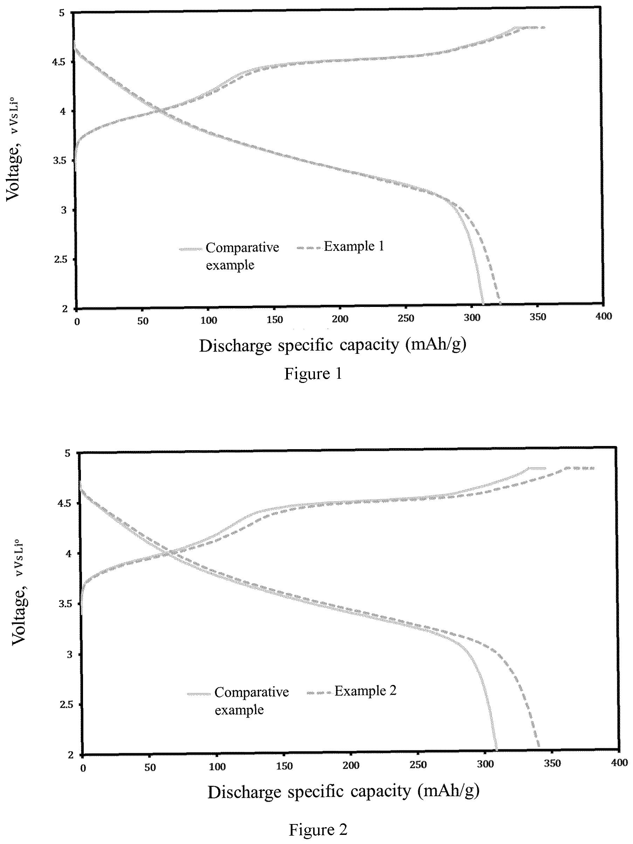

Fig. 1 is a first charging and discharging curve of the positive electrode material in the comparative example and Example 1 of the present disclosure.

Fig. 2 is a first charge and discharge curve of the positive electrode material in the comparative example and Example 2 of the present disclosure.

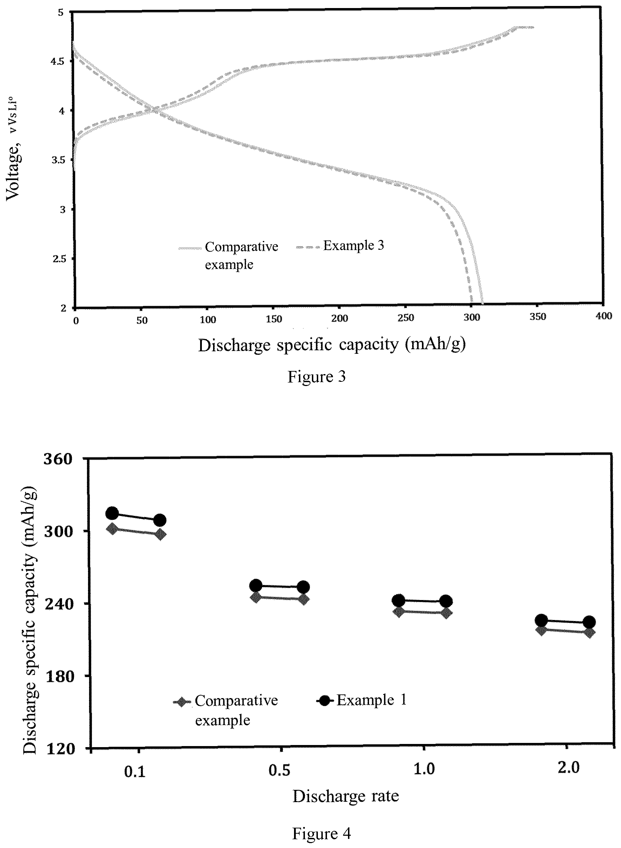

Fig. 3 is a first charge and discharge curve of the positive electrode material in the comparative example and Example 3 of the present disclosure.

Fig. 4 is a test result of rate performance of the positive electrode material in the comparative example and Example 1 of the present disclosure.

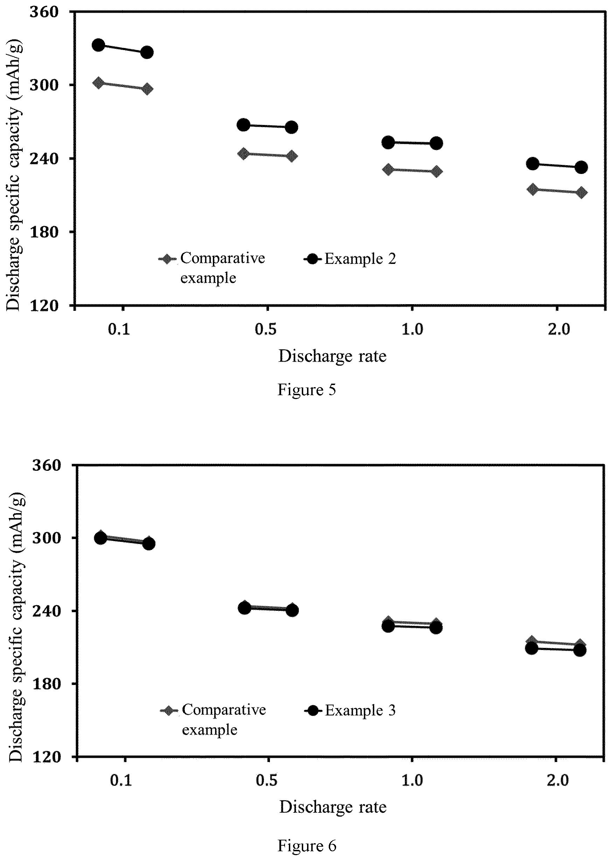

Fig. 5 is a test result of rate performance of the positive electrode material in the comparative example and Example 2 of the present disclosure.

Fig. 6 is a test result of rate performance of the positive electrode material in the comparative example and Example 3 of the present disclosure.

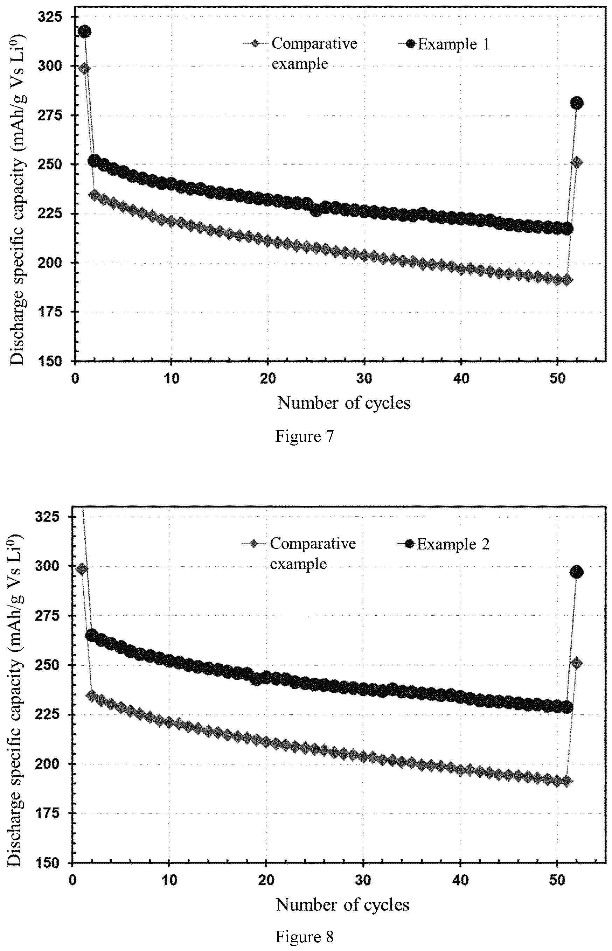

Fig. 7 is a test result of the cycle performance of the positive electrode material in the comparative example and Example 1 of the present disclosure.

Fig. 8 is a test result of the cycle performance of the positive electrode material in the comparative example and Example 2 of the present disclosure.

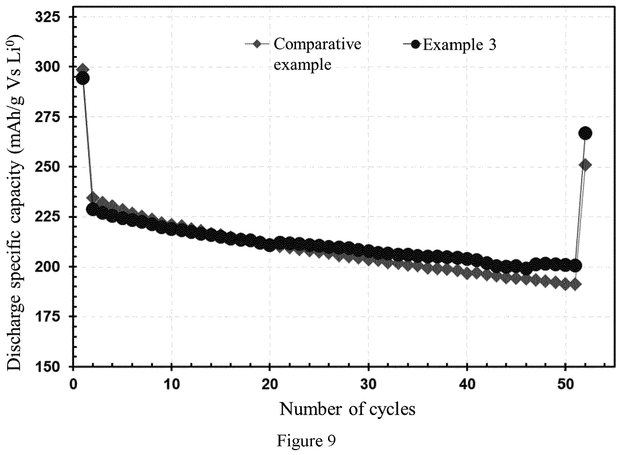

Fig. 9 is a test result of the cycle performance of the positive electrode material in the comparative example and Example 3 of the present disclosure.

From the above results, it can be seen that the first charge specific capacity corresponding to Examples 1-3 was between 340-360 mAh/g; and the discharge specific capacity was between 300-330 mAh/g.

It can be seen from Fig. 1 that the positive electrode material of the example of the present disclosure can increase the discharge specific capacity of the lithium-rich manganese-based cathode material by 4.5%.

It can be seen from Fig. 2 that the first charge specific capacity and discharge specific capacity of the lithium-rich manganese-based cathode material in the comparative example were 346.9 mAh/g and 308.7 mAh/g respectively; and the first coulombic efficiency was 88.98%; the first charge specific capacity and discharge specific capacity of the positive electrode material in Example 2 were 382.8 mAh/g and 341 mAh/g, respectively; and the first coulombic efficiency is 89.10%. The positive electrode material of the example of the present disclosure can greatly improve the discharge specific capacity by about 10.5%.

It can be seen from Fig. 3 that the first specific charge and discharge specific capacity corresponding to Example 3 were 348.6 mAh/g and 300.8 mAh/g, respectively; and the first coulombic efficiency was 86.3%. Compared with the comparative example, the discharge specific capacity and coulombic efficiency have been reduced.

It can be seen from Fig. 4 that the discharge specific capacity of the positive electrode material prepared in Example 1 under high current conditions has been improved to a certain extent. The specific discharge capacity at 1C rate was 240.1 mAh/g, and the specific discharge capacity of the comparative example under this condition was 231.1 mAh/g.

It can be seen from Fig. 5 that the discharge specific capacity of the positive electrode material prepared in Example 2 at 1C rate reached 253mAh/g, which is significantly improved compared to the 1C rate performance of the comparative example. This data will be an important technological breakthrough in the field of positive electrode materials.

It can be seen from Fig. 6 that the discharge specific capacity of the positive electrode material prepared in Example 3 was reduced under 1C and 2C rate conditions; and the specific capacities were 227.5 and 208.5 mAh/g, respectively, indicating that the synthesis path of forming the shell on the surface of the substrate particles through the high-temperature solid-phase reaction by mixing Ti-containing compounds, Al-containing compounds, and P-containing compounds with the matrix particles easily leads to the formation of miscellaneous phases by side reactions, which reduces the diffusion coefficient and conductivity of lithium ions in the shell.

It can be seen from Fig. 7 that the capacity retention rates of Comparative Example and Example 1 after 50 charge/discharge cycles were 81.5% and 86.2%, respectively. Example 1 improved the cycle capacity retention rate by 5.8%.

It can be seen from Fig. 8 that the positive electrode material prepared in Example 2 had a capacity retention rate of 86.4% after 50 charge/discharge cycles. Compared with the comparative example, its cycle capacity retention rate increased by 6.0%.

It can be seen from Fig. 9 that the cycle capacity retention rate corresponding to Example 3 was 87.6%, which is increased by 7.5% compared to the comparative example, indicating that the selection of the shell material will still improve the electrochemical performance of the cathode material although the preparation process has a certain influence.

The first charge specific capacity and discharge specific capacity of the product of Example 4 were respectively 315 mAh/g, and the specific discharge capacity at 1C rate was 236 mAh/g; after 50 charge/discharge cycles, the capacity retention rate was 85.4%.

The first charge specific capacity and discharge specific capacity of the product of Example 5 were respectively 311 mAh/g, and the specific discharge capacity at 1C rate was 232 mAh/g; after 50 charge/discharge cycles, the capacity retention rate was 85.9%.

The first charge specific capacity and discharge specific capacity of the product of Example 6 were respectively 151 mAh/g, and the specific discharge capacity at 1C rate was 144 mAh/g; after 50 charge/discharge cycles, the capacity retention rate was 99.1%. The positive electrode matrix material of this embodiment was lithium iron phosphate, which has a very low gram capacity, but also has very high cycle stability.

The first specific charge capacity and specific discharge capacity of the product of Example 7 were 209 mAh/g, and the specific discharge capacity at 1C rate was 189 mAh/g; after 50 charge/discharge cycles, the capacity retention rate was 89.6%. This example was a high nickel ternary material; the discharge gram capacity is between the rich manganese-based cathode material and the lithium iron phosphate cathode material, and the cycle capacity retention rate is also the same.

## Claims

1. A positive electrode material comprising:
matrix particles, wherein the material forming the matrix particles comprises at least one selected from the group consisting of lithium-rich manganese-based materials, lithium nickel cobalt manganate, lithium nickel cobalt aluminate, lithium iron phosphate, lithium manganate, lithium nickel cobalt manganese aluminate, and lithium nickel manganate, and
a shell covering at least a part of the outer surface of the matrix particles, wherein the material forming the shell comprises at least one selected from the group consisting of lithium titanium phosphate, lithium aluminum germanium phosphate and lithium aluminum titanium phosphate.

2. The positive electrode material of claim 1, wherein the shell has a thickness of 0-500 nm, and is not 0.

3. The positive electrode material of claim 2, wherein the shell has a thickness of 0-200 nm, and is not 0.

4. The positive electrode material of claim 3, wherein the shell has a thickness of 0-100 nm, and is not 0.

5. The positive electrode material of any of claims 1-4, wherein the positive electrode material has a particle size distribution of 1-17µm.

6. The positive electrode material of claim 5, wherein the positive electrode material has a particle size distribution of 4-15µm.

7. The positive electrode material of any of claims 1-6, wherein the material forming the matrix particles is the lithium-rich manganese-based material; and the positive electrode material has a chemical composition of
aLi_{2+α}Mn_{1-µ}Ti_{µ}O_{3-ν}F_{ν}·bLi_{1+α'}MO_{2-ν'}F_{ν'}·cLi_{1+α"}Al_{β}M'_{2-β}(PO₄)₃,
wherein a+b+c=1, 0<a<0.6, 0<b<0.5, 0<c≤0.05, 0≤α≤0.04, 0<µ≤0.5, 0.005≤ν≤0.02, 0≤α'≤0.04, -0.02≤α"≤1, 0.005≤ν'≤0.02, 0≤β<0.5;
M is at least one element selected from the group consisting of Ni, Co, Mn, Al, Mg, Ti, Zr, Zn, Ca, B, Ce and Cr;
M' is at least one element selected from the group consisting of Ti and Ge.

8. The positive electrode material of claim 7, wherein the positive electrode material comprises at least one selected from the group consisting of
0.545Li₂MnO_{2.995}F_{0.005}·0.45Li_{0.99}Ni_{0.444}Co_{0.444}Mn_{0.122}O_{1.995}F_{0.005}·0.005Li_{1.3}Al_{0.3}Ti_{1.7}(PO₄)₃,
0.545Li₂Mn_{0.989}Ti_{0.011}O_{2.995}F_{0.005}·0.45Li_{0.976}Ni_{0.444}Co_{0.444}Mn_{0.136}O_{1.995}F_{0.005}·0.005Li_{1.3}Al_{0.3}Ti_{1 .7}(PO₄)₃, and
0.545Li₂Mn_{0.989}Ti_{0.011}O_{2.995}F_{0.005}·0.45Li_{0.976}Ni_{0.444}Co_{0.444}Mn_{0.136}O_{1.995}F_{0.005}·0.005Li_{1.3}Al_{0.3}Ti_{1 .7}(PO₄)₃.

9. The positive electrode material of claim 1, wherein the positive electrode material satisfies at least one of the following conditions that
the discharge specific capacity at a rate of 0.1C is greater than or equal to 280mAh/g;
the discharge specific capacity at a rate of 1C is greater than or equal to 220mAh/g;
the capacity retention rate after 50 cycles of charge and discharge is greater than or equal to 85%.

10. A method for preparing the positive electrode material of any of claims 1-9, comprising:
ball-milling a mixture of matrix particles and a shell raw material for 1-10 hours to obtain a mixed material;
calcining the mixed material at 300-900 °C under O₂/N₂ atmosphere for 1-12h to obtain the positive electrode material,
wherein, the shell raw material is nano lithium titanium phosphate, nano lithium aluminum germanium phosphate or nano lithium aluminum titanium phosphate.

11. The method of claim 10, wherein the matrix particles are prepared by the following method 1 or method 2:
method 1: calcining a precursor material at 300-800°C under O₂/N₂ atmosphere for 4-12h to obtain a first calcined product,
mixing the first calcined product with a lithium source, and calcining the obtained mixture at 600-950°C under O₂/N₂ atmosphere for 10-24 hours to obtain the matrix particles;
method 2: calcining a precursor material at 300-800°C under O₂/N₂ atmosphere for 4-12h to obtain a first calcined product,
mixing the first calcined product with a lithium source, and calcining the obtained mixture at 600-950°C under O₂/N₂ atmosphere for 10-24 hours to obtain a second calcined product;
ball-milling a mixture of the second calcined product and nano-TiO₂ for 2-8 hours, then calcining at 750-850°C under O₂/N₂ atmosphere for 4-16 hours to obtain the matrix particles.

12. A lithium ion battery comprising the positive electrode material of any of claims 1-9.

13. An electric vehicle comprising the lithium ion battery of claim 12.
